Europäisches Patentamt

European Patent Office

Office européen des brevets

(11) Publication number: 0 338 658
A2

# EUROPEAN PATENT APPLICATION

(21) Application number: 89300915.9

(22) Date of filing: 31.01.89

(51) Int. Cl.4: H04Q 9/00 , H04M 11/00 , H04H 9/00

(30) Priority: 19.04.88 US 183113

(43) Date of publication of application:
25.10.89 Bulletin 89/43

(84) Designated Contracting States:
DE FR GB

(71) Applicant: CONTROL DATA CORPORATION
8100-34th Avenue South
Minneapolis Minnesota 55440(US)

(72) Inventor: Allison, Arthur Webb, III
700 Brighton Knowles Drive
Brinklow Maryland 20862(US)
Inventor: Damoci, Joseph Andrew
11238 Cherry Hill Road
Beltsville Maryland 20705(US)
Inventor: Forlines, William Henry
10022 Battleridge Place
Gaithersburg Maryland 20879(US)
Inventor: Gipson, Carl Bradley
8453 Imperial Drive
Laurel Maryland 20708(US)
Inventor: Kern, Matthew Ford
22 Carters Rock Court
Catonsville Maryland(US)
Inventor: Myers, David Michael
922 Mary's Lane
Martinsburg West Virginia 25401(US)

(74) Representative: Caro, William Egerton et al
J. MILLER & CO. Lincoln House 296-302 High
Holborn
London WC1V 7JH(GB)

(54) Distributed monitoring system.

(57) A distributed monitoring system and a method of using such a system are disclosed for collecting television channel tuning data, household purchase data, VCR channel usage data and the like, on site at a plurality of pre-selected households. The system features a set of spoke meters (110 to 116) in each of the households for monitoring the data, and a hub unit (101) in each of the households for concentrating and transmitting the data in a systematic fashion to a host computer (102) at a central site.

# DISTRIBUTED MONITORING SYSTEM

The invention generally relates to a distributed monitoring system for monitoring and collecting data on site at each of a plurality of remote locations and for transmitting such data to a central location. For example, the system may be used to collect and transmit television channel tuning data, household purchase data, VCR channel usage data, and the like from a plurality of pre-selected households.

The prior art contains various systems for monitoring viewing habits and product purchase preferences of television viewers, sometimes referred to hereinafter as panelists. The earliest such systems merely collected data on site for eventual manual collection as to the television channels viewed and the times of viewing for various panels of viewers in order to determine market share and ratings of various television programmes. Later, systems came into being for use with cable television networks with two way communications over the cable network between the head end thereof and various cable subscribers. In such a system, the television sets are typically interrogated periodically from this central location over the cable, with the channel selection and time information being sent back to the central location and logged for statistical compilation. Such systems have also been used in the past in so-called pay television systems in which billing information is sent over the cable network to a central location from the various subscribers to the pay television system. The prior art also includes such systems in which a memory is provided at the remote location, e.g. at the television receiver, for accumulating data as to the channel being viewed and time. The accumulated data is then periodically transmitted over conventional telephone lines from the remote location to the central location, by telephone calls initiated either at the remote location or at the central location.

Systems for remotely accumulating data regarding the habits of television viewers and their qualitative reaction to material have today become important from the standpoint of market research. For example, the effectiveness of television commercials can be monitored by correlating viewing of those commercials with subsequent purchase decisions made by panelists whose viewing habits are being monitored. One manner of achieving this which has been utilised in the past is to have the co-operating panelists keep a diary as to purchase of products. The purchase information recorded in these diaries is then correlated with the commercials viewed by these co-operating panelists.

In an alternative arrangement disclosed in the prior art, in areas where universal product code automated check outs are available, for example at check out counters in grocery stores, a co-operating panelist presents a card coded with a unique scanner panelist identification similar to the universal product code symbol on the products purchased. The store's computer can automatically retain such purchase data for subsequent transfer to a market research company computer data base for correlation with the data regarding the various panelists viewing of commercials. Such arrangements of course require co-operation of stores within the area of the panelist locations, and are therefore more suited for limited geographic groupings of panelists in a single locale or city, and are not readily applicable to a national assemblage of panelists extending across an entire country.

In market research relating to commercials and their effectiveness, it is also sometimes important to evaluate the effectiveness of alternative forms of a commercial. One way of achieving this in the context of a cable television network is to split the subscribers or panelists into two or more groups, and then show the alternative forms of commercial to the respective groups of panelists. Correlation of product purchase information regarding the panelists of each group with the form of the commercial which they viewed can then be used to assess the effectiveness of the various alternative forms of the commercial. The prior art also includes examples of systems wherein certain portions of a viewing audience can be selected on a dynamic basis and furnished with substitute programming. Such a system is disclosed, for example, in U.S. Patent No. 3,639,686. In accordance with that system, an auxiliary television signal is broadcast which contains not only substitute programming, i.e. video signal information, but also control information such as pulse code information for remotely selecting panelists who are to receive the substitute programming. Digital address information is provided for each of the panelists, and those amongst the panelists who are to receive the substitute programming are selected by the pulse code information. U.S. Patent No. 3,639,686 notes that in selecting the panelists who are to receive the substitute programming, the number of categories available is dependent on the number of digital information bits that are incorporated in the system. A later U.S. Patent No. 4,331,974 also discloses an arrangement for selecting portions of a viewing audience on a dynamic basis and furnishing those portions with substitute programming.

A more recent invention for data gathering with particular utility in market research type applications is described in U.S. Patent No. 4,658,290. This patent teaches a system that includes a plurality of remote units which are controlled from a central location. Each of the remote units is attached to a television receiver which is generally but not necessarily linked to a cable network. Each of the remote units can function to determine which of several TV modes is in use as well as to store TV channel selector data, data from an optical input device, and/or data input by viewers representative of the composition of the viewing audience. The data is stored either for later collection by a portable data collector, or for direct transmission to the central location by each of the remote units. A video message for a TV viewer, such as a survey, may be transmitted from the central location and stored at the remote units, for later display on the TV receivers associated with the remote units. Substitution of alternate programming information may also be achieved from the central location in selected ones of the remote units.

The remote units described in U.S. Patent No. 4,658,290 are well known in the prior art and are typified by a channel meter, as described in U.S. Patent No. 4,605,958, and a VCR meter, as described in U.S. Patent No. 4,633,302.

Accordingly, a variety of television related metering devices and data collection systems are well known, which are placed in a household for the purpose of monitoring TV channel changes, accumulating time on a given channel and other information, and communi cating the data gathered to a central computer using dedicated telephone lines.

As TV technology rapidly advances and data gathering needs change (e.g. re cable, VCRs, active and passive people meters, single source purchase meters, etc), meters change accordingly. Each new type of meter must be separately accommodated at the central site, necessitating reprogramming of central site software. Additionally, each meter currently requires the built-in "smarts" needed for the collection of data from and the transmission of data either to a central household collector or via the telephone line to a central site.

It is an object of the invention to provide a more flexible distributed monitoring system, which may for example be capable of supporting new meter types and new metering applications as they are identified, and in which the need for re-programming central site software as new meter types and new metering applications come on line may be eliminated.

According to one aspect of the invention, there is provided a distributed monitoring system for monitoring data associated with a first set of devices, including at least one self contained receiver, for collecting monitored data on site at a plurality of remote sites, and for transmitting such data from said remote sites to a central site, comprising host computer means, including means for receiving transmitted data, located at said central site, and characterised by first means, coupled to said first set of devices for monitoring, collecting and concentrating said data on site at each of said plurality of remote sites and for systematically transmitting said concentrated data to said host computer means.

Preferably the first means include a set of relatively "dumb" meters, each having limited data collection capabilities, and a single "hub" unit located at each remote site or household, the hub unit handling communication between the central site and the household via a household telephone and communicating with the meters over a variety of communication links such as hardwired, RF or carrier current links.

For example, the system may be structured as a "hub and spoke" arrangement where the hub unit includes a sophisticated micro-processor and memory and the "spokes" are the communication links to the meters. The spoke meters may then be systematically polled and two way communication may be employed not only to permit each spoke meter to up load data, but also to allow the spoke meter to be remotely re-programmed from the central site via the hub unit.

Advantageously, such a system collects data in a fault tolerant manner, e.g. it can recover from remote location power failures, etc., and is operated transparently with respect to the panelists occupying a remote site household. For example, if the hub unit is utilising the telephone and a household occupant picks up the telephone to make a call, the system will get off the telephone and keep track of the task it was last performing in order to pick up where it left off once the household telephone user, unaware that the system was even utilising the telephone, hangs up.

More particularly, in one embodiment of the invention described below, a hub unit is provided at each of a plurality of panelist locations, and each hub unit is adapted to be coupled to a set of metering devices, one or more of which is coupled to one or more television receivers at each panelist location, or to one or more cable television converters in the case of a cable television network. Not all of the metering devices need be coupled to the television receiver or cable converter. For example, stand alone, special meters, such as purchase meters and wands, may be coupled to the hub unit independently of any TV receiver or cable converter connection.

In this embodiment of the invention, the coupling between the hub unit and the spoke meters may take the form an an RF link, hardwired connection, a carrier current link, or a combination of these links as desired. By way of example, a tuning meter may be coupled to the hub unit via an RF link while a purchase meter is hardwired to the hub unit.

The hub unit described herein includes memory means, a clock, a back-up power supply, means for interfacing with the household telephone in a manner transparent to the occupants of the household, and means for interfacing with the set of metering devices located at the remote site via any one of the previously mentioned communication links.

The spoke meters (set of meters) may conveniently include meters for monitoring and temporarily storing information regarding which of a plurality of television modes are in use, for obtaining viewer identification data, for injecting signals into the TV receiver's video stream, and for providing purchase data, etc. In the case of purchase meters, data collection can be accomplished via means for optically scanning bar codes and the like and storing information regarding the same. Such bar codes and the like can be representative of product purchase information or panelists responses to market research surveys amongst other things.

By utilising the aforesaid hub and spoke arrangement, the spoke meters may, for example, be polled periodically or on a virtually continuous basis by the hub unit, which then collects and concentrates the data acquired by each meter. As a result of this arrangement, standard communications and data transmission "smarts" can be used at the meter level, meter storage requirements can be kept to a minimum and no meter communications programming is required. The hub unit may be responsible for up loading data collected by a meter in a systematic fashion, for example, by using a pre-selected polling frequency. The hub unit may also monitor meter failures and serve as the interface with the distant central site computer. The remote units may easily be re-programmed by down loading control software from the central site, without having to modify the meters themselves. Thus, the invention at least in its preferred form provides a distributed monitoring system for monitoring, collecting and concentrating data at a plurality of remote sites, for transmission over telephone lines, in a manner which is flexible enough to support new meter types and new metering applications without having to re-programme existing central site software.

According to another aspect of the invention, there is provided a method of monitoring data generated at a plurality of remote sites utilising a distributed monitoring system that includes a host computer located at a central site, characterised by the steps of utilising first means, located at said remote site, to monitor, collect, concentrate and transmit data to said host computer, and organising said first means in a hub and spoke arrangement wherein a first portion of said first means monitors the data generated at each remote site and a second portion of said first means, also located at each remote site, serves as both an interface between said first portion of said first means and said host computer and as a programmable means for collecting, concentrating and transmitting the data being monitored.

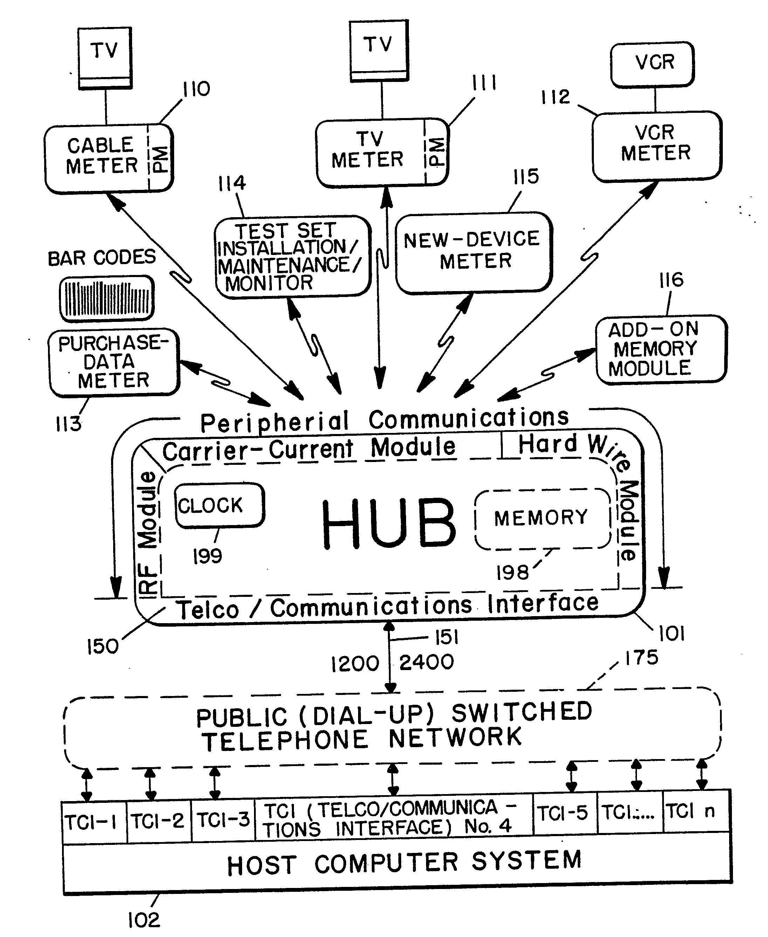

The invention will now be described further, by way of example, with reference to the accompanying Figure, which is a diagrammatic view of a distributed monitoring system embodying the invention.

The drawing shows a distributed monitoring system including a remotely located hub unit and a representative set of spoke meters, which may be coupled to the hub unit via a variety of depicted communication modules, and further including a bidirectional communications path, between the depicted hub unit and a centralised host computer, which utilises the public (dial up) switched telephone network over non-dedicated telephone lines. The system, which is described in detail below, is preferably modular to facilitate easy expansion.

The system features a number of different devices installed in any selected household. Each device has a unique set of functions to perform. The core device in the household is the "hub" unit, designated by the numeral 101, which acts as an interface between the household and the central data collection or host computer, designated by the numeral 102.

Various peripheral units or "spoke meters", examples of which are shown in the Figure, are used to meter televisions, cable converters, product purchase data, viewer IDs, VCRs, etc. as required. A cable meter 110, a TV meter 111, a VCR meter 112, a purchase data meter 113, a test set 114 and a new device meter 115 are all shown in the Figure to illustrate a set of meters that could be coupled to the hub unit 101 and to TV sets and VCRs located at the remote site. These peripheral units communicate with the hub unit 101, which concentrates the generated data and forwards it to the host computer 102. The flexibility and expandability of the system is a result of the very nonspecific nature of the interface between the hub unit and the peripheral units. New peripheral units can be introduced at any time, and old peripheral units may be remotely re-programmed and/or retired without decommissioning the entire system. For example, an add-on memory can be introduced by coupling an add-on memory module 116 to the hub unit 101 as shown.

Host computer/hub unit communication takes place using the household telephone line. This is depicted in the drawing as taking place via a hub unit telecommunication interface 150, a data communication link 151, the public (dial up) switched telephone network 175 and a set of tele-communications interfaces (TCl1 to TCln) with the host computer 102. There are two means of establishing the connection between the host computer 102 and the household hub unit 101. The primary means is dial out, in which the, household hub unit 101 telephones the central computer 102. Once the connection is established, the central computer 102 takes control of the communication session. For installation and maintenance purposes, the hub unit 101 can also detect a ring and can answer an incoming telephone call (dial in) from the central computer 102. According to one embodiment of the invention, this installation capability may be enabled by depressing a protected push button in the hub unit 101. Another embodiment could have these features reversed, i.e. push button for dial out, or have both on programmable schedules conditional upon host computer down loaded data.

Communication between the hub unit 101 and the peripheral units is achieved, according to the preferred embodiment of the invention, via plug-in communication modules. Examples of possible communication links which may be used include hardwire, AC carrier current and RF communication links.

Each peripheral unit is uniquely addressable by the hub unit 101. The preferred embodiment of the invention permits a maximum of one hundred and twenty six peripheral units with each hub unit but a greater or lesser number of peripheral units may easily be accommodated as the application dictates.

According to the preferred embodiment of the invention, the hub unit and each peripheral unit has a self test capability for all crucial system components. If the system is implemented in this manner, service calls at the remote site can be kept to a minimum. During any of the aforesaid communication sessions with the host computer 102, the computer can recover error logs maintained for each unit in the system. This feature will be described in greater detail hereinafter.

Also, further details regarding system fault tolerance generally will be set forth hereinafter. Briefly, however, according to the preferred embodiment of the invention, the peripheral units are provided with sufficient power reserve capabilities to report to the hub unit 101 if AC power is lost. The hub unit 101 can thus discriminate between peripheral units that do not respond due to loss of power and units that do not respond due to hardware failure. This capability permits peripheral units on switched outlets to effectively report loss of AC power.

Furthermore, according to the preferred embodiment of the invention, the hub unit 101 contains an accurate time of day clock 199 with a resolution of .01 second and an accumulated error of less than 1 second per day. The peripheral units used in this embodiment can track elapsed time with 0.1 second accuracy. Obviously, greater or lesser resolution capabilities can be used as the application dictates without departing from the scope of the invention.

When peripheral units that generate time specific events (such as tuning meters and injection meters) include 0.1 second resolution timers, polling these units causes the tenth count at the time of the event to be transmitted to the hub unit 101 along with the current count of tenths of a second that the peripheral unit maintains. The hub unit can use the difference between successive counts of tenths of seconds, for example, as an offset from the correct local time to determine the exact time at which the event occurred and store the data accordingly.

By sending a command from the host computer 102 to the hub unit 101 which causes an immediate response, one can measure the time elapsed between the sending and receipt of the response. Dividing this value in half enables extremely accurate time setting of the hub unit. This feature can be used to create a commercial monitoring peripheral system for precise measurement of commercial broadcast times.

The purchase data meter 113 included in some configurations of the system may collect UPC codes, EAN codes and JAN symbols., The preferred embodiment of the invention is a system that includes a hand held symbol reader that is capable of automatically de-coding UPC symbols both with and without supplemental codes. However, the invention does not require the use of such a reader, and may feature only the use of well known symbol reading device (such as a WAND), as contemplated by the patents referred to above, should a recording of purchases at the remote site be desired.

Looking at the system from a data collection point of view, data is collected from each peripheral unit and stored as separate information in the hub unit 101. The host computer 102 recovers each set of data from the hub unit 101 separately.

According to the preferred embodiment of the invention, television set tuning data is reported to the central site with 1 second resolution. This data includes date, time, channel tuned, CATV or off air or auxiliary input selection. Viewer ID data is reported for each television set. This data includes household members and number of guests defined in the categories of sex and age. Purchase data is reported by UPC code, EAN code, JAN code or other commonly used code types.

VCR usage data typically collected includes data, time, duration and channel of record. VCR playback includes time and duration of playback.

The preferred embodiment of the invention provides for a limited degree of operation in some of the peripheral units after power failure. This is to enable peripheral units powered from switched outlets to report to the hub unit 101 that power has been lost.

The tuning meter/people meter used with the preferred embodiment includes an alpha-numeric display capability of nine lines by twenty characters which can overlap or substitute for a television picture. The tuning meter also includes volume control. System characteristics such as meter line display capability, inclusion of a volume control option, etc., are variables those skilled in the art will appreciate as possibly enhancing a particular version of the disclosed system.

Since the hub unit 101 is a central feature of the system, a detailed description of its structure and function will now be set forth. The hub unit 101 is the interface between the set of meters, coupled to the hub unit, and the central computer 102. As indicated hereinbefore, the hub unit 101 continually polls all the peripheral units to monitor their status and collect generated data. The peripheral units are generally polled on a once per second basis, but some such units may be polled on a longer cycle. The cycle time can be varied dynamically to accommodate peaks in the communications traffic. Data is collected in real time and stored (concentrated) in the hub unit 101. At a predetermined time, typically every night, the hub unit 101 uses the household telephone line to call the host computer 102 and off load the collected data.

A suitable hub unit 101 can be based on an INTEL 80C186 micro-processor. This CMOS micro-processor is capable of addressing up to 1 MEG of memory through an on chip memory management unit, contains three 16 bit timer counters, two independent high speed channels, a programmable interrupt controller and a programmable wait state generator. In addition to this micro-processor, the illustrative hub unit 101 includes:-

1. An EPROM memory expandable to a maximum of 128K;

2. A CMOS RAM expandable to a maximum of 512K;

3. A time of day clock chip, shown in the Figure as the clock 199, accurate to within +/- 1 second per day and a resolution of 1/100 of a second;

4. Battery back-up capable of maintaining the clock chip and the CMOS RAM for a period of at least one month;

5. A 1K bit EEPROM;

6. An HDLC synchronous communications controller chip;

7. Power up/down sequencing hardware for the CMOS RAM protection;

8. A stall alarm which can be jumpered out of the circuit;

9. A total of two connectors for the modular insertion on various communication interface modules with some units containing a built in module;

10. A single connect or for standard asynchronous communication with a diagnostic tester and development hardware (at TTL levels);

11. A Bell 212A modem board operating on switchable 5 and 12 volt supplies and capable of ring detection, dialling (both pulse and DTMF), off hook detection and call progress tone detection; and

12. A separate power supply board with +5, +8 and +12 volt outputs. The illustrative power supply has the aforementioned battery back-up with sufficient capacity to ensure that the hub unit 101 has the ability to communicate with the host computer 102 once per day, 2 minutes per day, for power outages of up to one month duration. The mechanism by which this power supply is actually utilised is described hereinafter in the context of abnormal system conditions.

To appreciate system operation, a memory 198 within the hub unit 101 will be described, followed by a detailed description of hub/peripheral unit communications and hub unit/host computer communications, and a detailed description of the hub unit power supply, suitable hub unit packaging, temperature operating range and hub unit responses to abnormal conditions which help to achieve the system fault tolerance objective.

The memory 198 of the hub unit 101 can be viewed as being composed of three distinct components. These are the EPROM, the battery backed-up CMOS RAM and the EEPROM mentioned above. The EPROM and CMOS RAM reside within the normal address space of the micro-processor, while the EEPROM can be accessed by the micro-processor in a bit serial fashion. Jumpers are provided to allow the use of various capacity EPROM and RAM devices.

The preferred embodiment of the hub unit 101 includes two sockets, along with appropriate jumper options, to accept most 27XX, 27XXX EPROMS. The actual EPROM used can be dictated by storage requirements. The EPROM is used to dead start a program and should be located at the high end of memory as a re-set goes to address FFFFD HEX.

As is well known and appreciated by those skilled in the art, firmware can be provided within the EPROM to allow the hub unit 101 to power up from a "cold start" and perform internal self diagnostics as well as initial communications with the central site computer 102. During such a communication session, the central site can down load an operating system, system configuration parameters and the peripheral communication drivers to the CMOS RAM of the hub unit 101.

Upon a system re-set or power up, firmware resident within the EPROM can also be used to perform a sequence of diagnostic tests not only to verify the operational status of various hub components, but also the validity of programs and data resident within the CMOS RAM and EEPROM. If these tests pass, the hub unit 101 simply commences normal operation. A failure of any of the diagnostic tests, in accordance with the preferred embodiment of the invention, will result in the hub unit performing an out dial, if possible, to inform the host computer 102 of its failure.

The illustrative hub unit 101 also includes a total of four sockets, along with two jumpers, to accept either 32 or 128K by 8 static RAM devices. Each of these sockets is de-coded to be contiguous. In addition, each RAM is provided with battery back-up power and should be controlled by power up/down sequencing hardware to ensure reliable data integrity.

The CMOS RAM memory serves several distinct functions within the hub unit 101. First, it is used to store the operating system which is transmitted to the RAM by the central site computer 102. Second, the RAM contains the system configuration parameters and communication drivers (including survey and people meter screens) required by the hub unit 101 for communication and control of the peripheral units connected to the hub unit 101. Finally, the RAM is used to log hub and peripheral unit events for transmission to the host computer 102.

The 1K bit EEPROM is used to store various critical system parameters. Normally this memory may only be read by the micro-processor. Writing to it is only allowed under certain specifically defined conditions to be described hereinafter. Both reading from and writing to the EEPROM is accomplished, according to the preferred embodiment of the invention, using a bit serial format.

The critical parameters stored in the EEPROM include, for example, the serial number of the hub unit itself, a market group code, the main and back-up telephone numbers of the host computer and the timing and pulse/DTMF information required for the dialling process for each. Separate check bytes are also desirably maintained within the EEPROM for each of these items.

According to the preferred embodiment of the invention, data (other than the serial number of the hub unit) which is stored within the EEPROM may be altered by the host computer or a tester. The serial number stored in the EEPROM may be altered only by the test set when locally connected to the hub unit.

Turning to hub/peripheral unit communications, it should be remembered that a main purpose of the hub unit 101 is to concentrate data generated by itself and received from its peripheral units and transmit this data to the host computer 102 on a periodic basis. To communicate with the peripheral units, the hub unit 101 is equipped with a high level data link control (HDLC) chip. Communications are configured in a synchronous half duplex format. In addition, the hub unit 101 includes two slots to accept any combination of a set of communication modules. The preferred embodiment of the invention supports RF, carrier current and hardwire modules.

The hub unit 101 is capable of determining which type of interface module (if any) is installed in each of its communication module slots. To facilitate this, three connector pins have been defined which either will or will not be pulled to ground within the communication modules. This will allow expansion to up to seven different types of modules in the illustrated hub unit 101.

The hub unit 101 is also capable of automatically selecting baud rate for communications with its peripheral units as a function of module type.

The hub unit 101 used in the present system has the capability of individually activating the communication modules installed in it and the ability to place them in either transmit or receive mode. Various communications protocols can be supported with different down loadable software and communications modules. Furthermore, the hub unit 101 scans each defined peripheral unit in the system on an adjustable time and priority basis. For example, some peripheral units may be scanned at a rate or once every two seconds, others either more or less frequently with some peripheral units having priority over others. The hub unit 101 is adapted to receive requests from peripheral drivers to alter the scan rate and priority level of the associated peripheral units. With this ability, the scan rate of a peripheral unit may be optimised for current conditions.

The illustrative hub unit 101 supports proper error detection and communication protocols to ensure error free communications between itself and its peripheral units, and supports communication with up to 252 addressable peripheral units. In the preferred embodiment of the invention, address 00 is reserved for use by the hub unit 101, OFFH is not allowed, OFEH is reserved for the tester and OFDH is reserved as the install address.

The communication modules of the preferred hub unit 101 are modular, i.e. have the same physical dimensions and are equipped with a standard connector adhering to a defined electrical interface. Such modules are completely interchangeable throughout the system. When de-activated by the hub unit 101, the modules consume a minimum amount of power and do not in any way impair communications among any remaining modules in the system. Similarly, a loss of power to a module does not impede communications among any remaining modules in the system. For example, an unpowered hardwire module would not load a hardwire communication path to the extent that communication among other peripheral units using hardwire modules is impaired. A suitable physical size for the modules contemplated is approximately 3.0 x-5.0 x 1.0 inches (76 x 127 x 25 mm).

The hardwire module simply provides an interface to a twisted pair communication media. Data is transmitted and received at 5 volt levels. Two pairs of connect terminals are provided on the back plate of the module to allow for ease of hooking peripheral units together.

The RF module simply provides an RF communication medium. A switch (or switches) are provided on these modules so that their communication frequency is selectable. This is to ensure that two adjacent installations do not have cross talk problems. If switch selection of frequency is not desirable, then modules of different frequencies can be assigned different module type codes.

The carrier current module simply allows communications over the household electrical wiring. In using these modules, consideration must be given to adjacent installation or other interference, and operation of a peripheral powered by a switched AC outlet. Four different carrier current module frequencies are supported in the preferred embodiment of the invention. Obviously, a fewer or greater number of frequencies could also be supported.

Hub unit/host computer communications are accomplished over the public switched telephone network 175, using a Bell 212A compatible modem. The modem is contained within the hub unit 101 (although it could be located externally) on a separate circuit board that also provides the capability of out dialling in either pulse or DTMF formats, call progress tone detection and ring detection to support instances requiring in dial. The Bell 212A protocol supports full duplex communications. The hub unit/host computer communications can be configured as half duplex as well. For example, one system configuration envisaged has a communication rate of 1200 baud, one start, a stop and 8 data bits.

Ideally, the modem is integrated on a single chip and is linked to associated controller chips.

Regardless of the modem chip set used, the modem should meet the following minimum criteria:-

1. a bus interface controller;
2. full Bell 212A implementation;
3. call progress tone detection in hardware;
4. pulse and DTMF dialling;
5. answer and originate mode capability;
6. carrier detect capability at -43/-48 dBm, with 25 ms on/off delay;
7. remote digital loop back ability; and
8. local analog loop back ability.

Since the hub unit 101 will utilise the householder's telephone line for communication with the host computer 102, should the householder attempt to use the line while it is being used by the hub unit, the hub unit must be able to detect the attempted usage and abort its communication with the host computer. It can therefore relinquish the line to the householder. To allow this detection of an extension off hook, a circuit is provided which causes the hub unit modem to go off hook and leave an unusually high voltage on the telephone line. This varies from approximately 12 to 17 volts. When an extension goes into the off hook state, it will drop the line to the usual 6 volts (approximately) causing a circuit to be actuated which disconnects the hub unit modem from the line.

In the event that an off hook condition is sensed after the hub unit has established communications with the host computer, the hub unit will immediately return to an on hook condition and log the aborted communication. After its out dial re-try time has passed, the hub unit will attempt to re-establish communication with the host computer.

Whenever a special answer push button on the hub unit 101 is depressed to set an "answer arming " circuit, the hub unit will answer the first call received at the household within the next five minute period. During this time, the signal from the ring detection circuit will be monitored and if it goes active, the hub unit 101 will immediately go off hook and attempt to establish communications with the host computer 102. It is only during periods when the "arming" circuit is set that the hub unit will go off hook in response to a ring signal. It will be ignored at all other times.

Telephone answer or pulse dial circuits are provided to assure that electronic telephones with unusually sensitive ring detection circuitry do not chirp momently. On pulse dial, this is done by slowing the rate at which current is introduced to the line. One telephone answer, an extremely fast ring detect/off hook latch is used.

The hub unit operating modes are described next. There are two modes of operation for communication with the central computer 102, in dial and out dial. Regardless of where the call is initiated, the communi cations protocols between the two devices should be identical. The host computer 102 acts as the controller, i.e. during normal communication, the hub unit 101 only transmits in response to a packet from the host computer. This rule may be broken by the hub unit if it determines that it must transmit an end of transmission (EOT) packet and terminate transmission.

A point to notes that the modem operates in originate mode if it initiated the call, but otherwise it operates in answer mode.

The out dial sequence will be described first followed by a description of the in dial sequence.

An out dial sequence is initiated by the hub unit 101 whenever the out dial window opens or at the re-try time following an aborted communication session. The out dial sequence is composed of the following steps:-

1. Check if the householder is currently using the telephone. Abort and re-schedule out dial if in use. Log reason for abort in the hub unit's log;

2. Go off hook and check for a dial tone.. Abort if not present, re-schedule out dial and log the abort;

3. Determine which telephone number to use (either primary or alternative) and perform the out dial while monitoring off hook. Abort if off hook sensed, re-schedule out dial and log the abort;

4. Monitor call progress tones. Abort on time out, off hook or busy. Re-schedule out dial and log abort;

5. Await carrier and an enquire (ENQ) packet from the host computer 102. Abort on time out or off hook, re-schedule out dial and log abort; and

6. Process and respond to packets received from the host computer 102 while monitoring off hook and carrier. Abort on off hook or loss of carrier, re-schedule out dial and log the abort.

Note that any abort results in an event being logged in the event log of the hub unit 101. A variety of different event codes can be employed so that it can be determined what caused the call to be aborted and during which portion of the out dial or communication session it occurred. This provides valuable analysis information.

The time and number used by the hub unit 101 when performing an out dial to the host computer 102 is controlled by the real time clock 199 in conjunction with a group of variables specified by the hub unit 101 which may, for example, include:-

1. an initial out dial time, specified as year, month, day, hour, minute, second;

2. a primary re-try interval specified in minutes and seconds. I(p);

3. a secondary re-try interval specified in minutes and seconds. I(s);

4. a value indicating the number of re-tries to be performed using the primary and secondary telephone numbers. N(p); and

5. a value indicating the number of re-tries to perform using the primary and back-up telephone numbers alternately. N(a).

Upon the occurrence of the out dial time, the hub unit 101 will commence out dialling to the host computer 102 either until a successful communication session has been completed or until the complete re-try sequence, such as the one set forth detailed below, has been exhausted.

1. N(p) attempts at the interval specified by I(p), using the primary telephone number;

2. N(p) attempts at the interval specified by I(p), using the back-up telephone number;

3. N(a) attempts at the interval specified by I(s), using the primary and back-up telephone numbers alternately.

Note that it is the responsibility of the host computer 102 to ensure that the total span of retries does not exceed 21 hours. That is

$$2 * (I(p) * N(p)) + (N(a) * I(s))$$

is less than 21 hours.

Upon exhaustion of the above sequence, the hub unit 101 will re-schedule its next out dial time for 24 hours after the initial out dial time.

The in dial sequence will be described next. For in dial (a ring) the hub unit 101 should only respond if its "answer arming" circuit is set. If this is the case, the hub unit 101 will answer immediately upon sensing the ring. It will then simply:-

1. monitor for carrier and the ENQ packet from the host computer 102. Abort on time out or off hook and log the abort; and

2. process and respond to packets received from the host computer 102 while monitoring off hook and carrier. Abort if required and log the abort.

The aborting of a communication session preferably causes the "answer arming" circuit to be cleared immediately.

Communications between the hub unit 101 and host computer 102 are accomplished by utilising various defined packets of data as alluded to hereinbefore. The definitions of the packet formats and their contents can be varied to suit the application without affecting the scope of the invention.

Communications failures between the hub unit 101 and host computer 102 and the system response thereto, will now be described. The failures fall into two broad categories: those that occur prior to the log on of the hub unit 101 to the host computer 102, and those that occur after.

Those that occur prior to a log on are: failure of the host computer 102 to answer (line busy, etc) and householder off hook detected. In either case, the hub unit 101 simply abort its attempt, logs the failure, returns to an on hook condition and re-schedules another attempt at the re-try time in the failure.

Those that occur after the initial log on, include a simple failure of communication (i.e. a noisy telephone line that eventually results in a communication time out), abrupt broken communication (sensed by loss of carrier from the host computer 102), or a householder off hook detected. In all cases, the hub unit 101 will return to an on hook condition, log the failure and re-schedule another attempt at the re-try time in the future.

The hub unit power supply will now be described. The power supply for the illustrative hub unit 101 is designed to provide +5 and +12 volts and has battery back-up capacity to maintain these voltage as well as provide an AC loss signal to the micro-processor board so that it may detect both loss and restoration to the AC line and incorporate the necessary components to provide carrier current coupling to the AC line.

All power supply components, with the possible exception of the batteries required for back-up power, are preferably mounted on a single circuit board. For safety and RFI reasons, the components on this board should be physically placed so as to segregate those connected to the AC line from the remaining components. These components include power supply transformer, line circuit breaker and carrier current coupling components.

Battery back-up of the two voltages can be provided by a lead acid battery. The required charging circuits should also be included.

To attain voltage regulation at a desired level of accuracy and to minimise battery cost, three terminal IC regulators should be utilised.

A suitable power supply specification is as follows:

1. Nominal load: 12 volts at 200 ma, and 5 volts at 400 ma, (all of which are switchable from the time of day clock when AC power is off), and a separate unswitched +5 volt supply at 10 ma for memory and time of day clock retention (1 ma typical).

2. AC line input: 90 - 135 volts, 60 Hz, 15 watts nominal at 115 volts, 25 watts maximum.

3. Load regulation: switched 12 volt output, +'- 1 volt, 50 ma to 200 ma load including back-up; switched 5 volt output, +/- 200 mv 20 ma to 500 ma load including back-up; unswitched +5 volt output, +200/-500 mv, 0.1 ma to 10 ma, including back-up.

4. Battery charging: automatic and regulated over 100 to 135 volt AC input range.

5. Back-up capability (all outputs): 6 hours minimum (for +5 volts) at 100 ma load, 1 month minimum for unswitched +5 volts at 200 micro-amp load.

6. ESD: spark gap from AC line to chassis at 5000 volts nominal.

7. Carrier current: line coupling components on board.

8. AC line protection: AC circuit breaker, PC mounted, accessible re-set.

As far as packaging is concerned, the illustrative hub unit 101 may be packaged in a metal enclosure 14 inches (356 mm) wide, 6 inches (152 mm) deep and 3 inches (76 mm) high. It has rubber feet on two sides so that it can be set on either of two faces. Means are provided such that it may be hung from a vertical surface.

The illustrative hub unit 101 is provided with a 6 foot (1828 mm) AC line cord with a three prong electrical plug. The hub unit power supply is protected by a circuit breaker. The actuator of the breaker is red, located near the line cord and projects through the case.

A standard six conductor telephone jack is provided for connection to the household telephone line. The button that is actuated to arm the hub unit 101 to intercept an incoming telephone call is white and located near the telephone jack.

Two LEDs are viewable on the exterior of the hub unit 101, one LED indicates the presence of AC power and the other LED is illuminated when the hub unit 101 is armed to intercept an incoming telephone call.

Obviously the use of the LEDs, coloured actuator buttons, etc. are illustrative only and can be modified, eliminated or supplemented to suit the application of the hub unit 101.

In this embodiment of the invention, a standard four conductor telephone jack is provided for connection of the hub unit 101 to the test set 114 shown in the Figure.

The preferred embodiment of the invention includes a hub unit 101 that will operate over the temperature range -30°C to + 50°C when AC power is present. Since some of the electronics within the hub unit may not be rated for operation below 0°C, an internal heater has been provided to ensure that these components are not subjected to temperatures below their operations range.

The heater is not operational when AC power has failed (in the illustrative hub unit). Therefore, if AC power fails and the ambient temperature of the hub unit 101 falls below 0°C, a thermal sensor is provided to prevent the micro-processor within the hub unit from powering up. However, all memory and the time of day clock continue to be maintained under these conditions. When AC power is restored, the normal operation will resume after the heater has warmed the hub unit electronics to 0° C.

To conclude the detailed description of this embodiment of the invention, the response of the system to abnormal conditions will now be set forth.

One of the tasks performed upon system re-set, as well as on a routine basis by the operating system, is the monitoring and verification of various critical portions of the software within the hub unit 101. Verification checks are performed on the contents of the EPROM and the EEPROM, the clock chip time, the event memory sector allocation map and portions of the operating system. In addition, the hub unit 101 must handle communication failures, either with its peripheral units or with the host computer 102, in a logical and well defined fashion.

System memories failures will be addressed first.

As indicated previously, the systems CMOS memory is utilised for a variety of functions, the more critical of which will be monitored for validity of content on a periodic basis. These areas are the sector allocation map, event logs and critical portions of the operating system itself. In addition, other memory components are part of the system memory and the critical functions present in them are monitored as well.

In particular, with respect to EPROM failure, two check codes are maintained within the systems EPROM so that its integrity can be verified. One check code is used to verify those sections of code required to support a communication session with the host computer 102 and the second is used to verify various utility routines resident in the EPROM. A check of the EPROM is, according to the preferred embodiment of the invention, only performed following a hardware re-set.

If it is determined that the utility routine portion of the EPROM is no longer valid, an appropriate error flag will be set and the hub unit 101 will attempt to perform an immediate out dial to the host computer 102 and inform the host computer of its conditions. If, however, it is determined that the communication support code in the EPROM is invalid, it will simply place itself in a "sleep" mode awaiting a resurrection by human hands.

If it is determined that the operating system is no longer valid, the hub unit 101 will simply perform a software re-set. The re-set will verify invalid operating system status and the hub unit 101 will set the appropriate status flags and attempt to communicate with the host computer 102 (assuming the EEPROM data is still valid).

Another key memory to monitor is a hub/peripheral unit configuration table. The hub/peripheral unit configuration table is an area of memory which contains the map to correlate the physical address of devices to be polled, with their logical device types and the medium over which they are to be polled. This area of memory should be checked for validity both periodically and upon system re-set. Should it be found to be invalid, the hub unit 101 sets a status flag and performs a software re-set. It will then initiate an out dial to the host computer 102. Once communication is established, the host computer 102 may request this table and correlate it with that stored in its data base. It will then be the responsibility of the host computer 102 to down load a new table. Note that polling of the peripheral units should be suspended until a new table has been received from the host computer.

Event log failure should also be monitored. The event log of each peripheral unit in the preferred embodiment of the invention has an associated block check code. This code should be routinely verified and up dated during the logging process. Should it be determined that the block check code is invalid, an appropriate status flag can be set, an event logged in the log in question and a new block check code generated.

If, after the above actions, the block check code remains valid, the hub unit 101 continues routine normal operation.

If the refreshed block check code cannot be verified, a permanent memory failure will be recorded for the hub unit 101. A log for the peripheral unit in question will be moved to alternate memory, a new block check generated and the condition reported.

Clock chip time failure should also be monitored. The time in the clock chip should be verified upon a system re-set and on a second by second basis by the operating system. If the time is found to be invalid (out of range), the hub unit 101 in the preferred system will:-

1. re-set the time to a default value (JAN 1, 1987, 00:00:00 for example);

2. log a time failure event (utilising the last valid time read) in event logs of the hub unit and all peripheral units that require time stamping of their events;

3. set a status flag indicating the failure;

4. perform a verification of the contents of the EEPROM and, if valid, begin attempts to communicate with the host computer; and

5. continue normal operation and event logging using the new time base (at least until a new time is loaded by the host computer).

Upon established communications with the host computer 102, the host computer would determine the failure and re-set the time in the clock chip. After re-setting the time in the clock chip, the hub unit 101 would ascertain if re-setting of the time was required as a result of a time failure. If this was the case, the hub unit would log a special event indicating this fact in all event logs of peripheral units requiring time stamping. In this way, any event logged between the time of the clock time failure and its re-set will be bounded by two unique event codes. These codes would be detected in the event logs obtained by the host computer and with proper correlation the host computer would be able to determine the true times of the events and thus no data loss would occur.

Finally, with respect to memory failure checks, the EEPROM should be monitored. If upon system re-set or during periodic checks by the operating system it is determined that the contents of the EEPROM are invalid, the preferred hub unit will set a status flag indicating EEPROM failure and then simply resume normal operation. At the next occurrence of out dial time, the action taken by the hub unit will be determined by what data within the EEPROM has failed. If the serial number and at least one of the telephone numbers is intact, an out dial will be performed using a valid telephone number. Upon establishing communications with the host computer 102, the host computer would ascertain and re-load the correct data. If at out dial it was determined that either the serial number or both telephone numbers within the EEPROM were invalid, the hub unit would not perform an out dial. At this point, it would be up to the central site operators to identify that the hub unit is failing to call in. It will then be necessary to arm the EEPROM circuit as described previously and have the host computer call the hub unit. Upon requesting status from the hub unit, the host computer will determine that the EEPROM data is invalid and will then attempt to re-establish the data. Regardless of whether or not this task was completed successfully, the host computer can obtain event log data if it so desires. In essence, failure of the EEPROM will not affect the operational ability of the hub unit with the exception of its out dial capability.

It will be understood by those skilled in the art that the described monitoring and recovery sequences are set forth for the sake of illustration only and could be modified to include a particular application and/or desired level of fault tolerance without departing from the scope of the invention.

An illustration of hub fault detection and recovery techniques for loss of AC power, and of how the system may be globally re-set will now be set forth.

The power supply within the preferred hub unit contains an AC detection circuit which signals the micro-processor of 120 VAC being lost. Upon sensing the loss, the illustrative hub unit scans all peripherals as rapidly as possible (i.e. normal scan rates will be ignored) to determine if the power outage is local to itself or is "global" in nature. The results of this scan are logged, status flags set appropriately, a "wake up" equal to the next out dial time is loaded into the real time clock chip and upon completion of this, the system performs a power supply shut down.

The hub unit 101 can remain shut down (note that the CMOS RAM and the real time clock are maintained on battery back-up) until the system supply voltage is restored either as a result of restoration of 120 VAC or the "wake up" time occurring. Restoration of the 120 VAC shall cause an event to be logged indicating time of return.

If the system supply is restored as a result of wake up time, the hub unit can make a single attempt at communicating with the host computer. If successful, the hub unit will simply inform the host computer of its condition and upon completion of communications return itself to a shut down condition. If unsuccessful, the hub unit can also return itself to a shut down state. No further wake up time will be scheduled according to the illustrative embodiment of the invention.

If the system supply returns as a result of restoration of 120 VAC, the hub unit can schedule an out dial at the next possible out dial time (if it has not already passed) and resume normal operation. If the out dial time has passed, the hub unit will commence attempts to communicate with the host computer. Note that appropriate logging of the above will be performed for analysis by the host computer.

Finally, with respect to re-set, a hardware re-set only occurs, according to the preferred embodiment of the invention, upon restoration of 120 VAC, manual operation of the re-set push button, a system stall or the occurrence of the wake up time that had previously been stored in the clock chip. Any of these events causes the memory to be configured with the EPROM enabled. Execution begins at address zero where calls are made to the various verification routines resident in the EPROM. One of the main areas that is verified is the operating system which resides in the RAM. If it is determined that the operating system is no longer valid, the operating system will be over-written with the contents of the EPROM, the EPROM will then be disabled and out dial attempts will be commenced. If it is found that the operating system is intact and other verification checks pass, the EPROM will be disabled, a re-set event will be logged in the log of the hub unit and normal operation will resume. Upon resuming normal operation, a comparison will be performed between the current time and the out dial window open and close times. If the current time precedes the out dial window open time, no special action will be taken. If this is not the case, the hub unit will begin repeated out dials in an attempt to establish communications with the host computer at the central site.

Failure of any of the verifications will result in the actions being taken that are detailed hereinbefore.

With respect to software re-set, it should be noted that initiation of a software re-set does not result in the automatic enabling of the EPROM. As with the hardware re-set, various verification checks are performed with one of the main checks being the operating system itself. Should the operating system be found to be invalid, the software will enable the EPROM and jump to address 0 (in essence it performs a hardware re-set). Aside from enabling the EPROM if required, the software re-set is virtually identical to the hardware re-set.

Finally, with respect to system stall, the occurrence of a stall will, according to the preferred embodiment of the invention, cause a hardware re-set, followed by the logging of an appropriate event in the event log. The action taken by the re-set routine is as set forth hereinbefore.

The foregoing description of a preferred embodiment of the present distributed monitoring system, including its hub and spoke design, has been presented for the purposes of illustration only. Many modifications and variations are possible. For example, since the disclosed system supports the systematic transmission of concentrated data, whether periodic or aperiodic, between the hub unit 101 and the host computer 102, unusual events in addition to emergency calls can be supported in alternative embodiments of the invention. Also, diverse types of self contained receivers, including but not limited to TV broadcast receivers, may be monitored. Still further, an alternative embodiment of the invention can support data transfer between two meters (or indeed any set of meters) via the hub unit.

## Claims

1. A distributed monitoring system for monitoring data associated with a first set of devices, including at least one self contained receiver, for collecting monitored data on site at a plurality of remote sites, and for transmitting such data from said remote sites to a central site, comprising host computer means (102), including means for receiving transmitted data, located at said central site, and characterised by first means (101, 110 to 116), coupled to said first set of devices for monitoring, collecting and concentrating said data on site at each of said plurality of remote sites and for systematically transmitting said concentrated data to said host computer means.

2. A system according to claim 1, further characterised by second means (150, 175, TCI1 to TCIn) arranged to provide a bi-directional communications interface between said first means and said host computer means.

3. A system according to claim 2, characterised in that said second means comprise telecommunications interface means (150), including a modem and a non-dedicated telephone line, at each of said remote sites for coupling said first means to said host computer means utilising the public (dial up) switched telephone network (175).

4. A system according to claim 3, further characterised by means for utilising the non-dedicated telephone line at each of said remote sites in a manner that is transparent to any other user of the telephone line at a given remote site.

5. A system according to claim 3 or 4, characterised in that said first means is operative to systematically perform an out dial sequence in order to establish communication over said non-dedicated telephone line with said host computer means and is further operative to be responsive to an in dial sequence initiated by said host computer means and received over said telephone line to facilitate receiving enquiries and data from said host computer means.

6. A system according to any of claims 2 to 5, characterised in that said first means comprises a second set of devices (110 to 116), including at least one metering device, for monitoring data associated with said first set of devices, and hub means (101) operative to collect, concentrate and transmit data monitored by said second set of devices.

7. A system according to claim 6, characterised in that said hub means includes interface module means operative to permit said hub means to be coupled to said second set of devices via at least one type of communication link from a set of communication links including RF hardwire and carrier current links.

8. A system according to claim 7, characterised in that said hub means further comprises memory means (198), a micro-processor, coupled to said memory means, said interface modules and said second means, for controlling the collection and concentration of data from said second set of devices and for controlling communications with said host computer means via said second means, and a time of day clock (199), coupled to said micro-processor, for synchronising the operation of said micro-processor and said memory means and for time stamping events to be logged in said memory means by said micro-processor.

9. A system according to claim 8, characterised in that said micro-processor is arranged to collect data from said second set of devices by systematically polling said second set of devices.

10. A system accordin to claim 8 or 9, characterised in that at least a part of the processing control function for at least one device in said second set of devices is performed by said hub means.

11. A system according to any of claims 8 to 10, characterised in that said hub means is programmable and may be re-programmed by down loading control software from said host computer means without having to modify said second set of devices.

12. A system according to claim 11, characterised in that at least one device in said second set of devices is remotely programmable.

13. A system according to any of claims 8 to 12, further characterised by means for measuring the elapsed time between the sending to said hub means of a host computer means command and the receipt by said host computer means of a response to said command, and means for setting said time of day clock as a function of said elapsed time.

14. A system according to any of claims 8 to 13, characterised in that the cycle time of said micro-processor can be varied dynamically.

15. A system according to any of claims 8 to 14, characterised in that said memory means comprises a CMOS static RAM for storing an operating system capable of being furnished to said hub means by said host computer means via said seconds means.

16. A system according to claim 15, characterised in that said CMOS static RAM is further operative to store system configuration parameters and drivers to facilitate communications between said hub means and said second set of devices, and is also operative to store event logs generated by said hub means and said second set of devices for subsequent transmission to said host computer means by said hub means.

17. A system according to claim 16, further characterised by means for segmenting and allocating said CMOS static RAM.

18. A system according to claim 17, characterised in that said memory means further comprises an EPROM for storing data which permits said hub means to perform initialisation, self diagnostics and hub/host computer means communication tasks.

19. A system according to claim 18, further characterised by means for performing memory mapping of said EPROM and said CMOS static RAM.

20. A system according to any of claims 8 to 18, characterised in that said memory means further comprises an EEPROM for storing critical system parameters.

21. A system according to any of claims 8 to 20, further characterised by means for operating said hub means in a fault tolerant manner.

22. A system according to claim 21, characterised in that said means for operating said hub means in a fault tolerant manner comprises an AC power loss detection circuit for signalling said micro-processor of AC power loss, and battery back-up power supply means arranged to be activated upon detection of AC power loss by said micro-processor.

23. A system according to claim 21 or 22, characterised in that said means for operating said hub means in a fault tolerant manner comprises a heater element for maintaining circuit components of said hub means above a pre-selected temperature level.

24. A system according to claim 23, further charac terised by re-set means for performing system re-initialisation.

25. A method of mohitoring data generated at a plurality of remote sites utilising a distributed monitoring system that includes a host computer (102) located at a central site, characterised by the steps of utilising first means (101, 110 to 116), located at said remote site, to monitor, collect, concentrate and transmit data to said host computer, and organising said first means in a hub and spoke arrangement wherein a first portion (110 to 116) of said first means monitors the data generated at each remote site and a second portion (101) of said first means, also located at each remote site, serves as both an interface between said first portion of said first means and said host computer and as a programmable means for collecting, concentrating and transmitting the data being monitored.

26. A method according to claim 25, further characterised by the steps of utilising a set of spoke meters (110 to 116) to perform the monitoring function of said first portion of said first means, and utilising a programmable hub unit (101), to which said spoke meters are coupled, to perform said interface, data collection, concentration and transmission functions of said second portion of said first means.

27. A method according to claim 26, further characterised by the step of utilising said hub unit to perform processing control functions for at least one of said spoke meters.

28. A method according to claim 26 or 27, further characterised by the step of utilising a non-dedicated telephone line at each remote site, coupled to the public (dial up) switched telephone network (175), to serve as a means for coupling said hub unit to said host computer.

29. A method according to claim 28, further characterised by the steps of utilising said hub unit to perform a dial out operation, whenever concentrated data is to be transmitted to said host computer, and arming said hub unit, selectively, to receive a dial in code and inputs from said host computer over said non-dedicated telephone line.

30. A method according to claim 28 or 29, characterised in that the step of utilising a non-dedicated telephone line at a given remote location is performed in a manner that is transparent to any other user of the same non-dedicated telephone line.

31. A method according to any of claims 26 to 30, further characterised by the step of coupling said hub unit to said spoke meters via a set of plug-in communications modules, which interface with a set of communications links including RF, hardwire and carrier current links.

32. A method according to any of claims 26 to 31, further characterised by the steps of creating and maintaining an error log at said remote site, via said hub unit, capable of being recovered and analysed by said host computer.

33. A method according to any of claims 26 to 32, further characterised by the steps of sending a command from said host computer to said hub unit, measuring the elapsed time between the sending of said command and the receipt of a response by said host computer, and setting a hub unit clock (199) as a function of said elapsed time measurement.

34. A method according to any of claims 26 to 33, characterised in that the cycle time of said hub unit may be varied dynamically.

35. A method according to any of claims 26 to 34, further characterised by the step of up loading data being monitored by said spoke meters to said hub unit at a pre-selected polling frequency.

36. A method according to any of claims 26 to 35, further characterised by the step of down loading control software from said host computer to said programmable hub unit in a manner that does not require the replacement, re-configuration or programming of said spoke meters attached to said hub unit.

37. A method according to claim 36, further characterised by the step of programming a given spoke meter by down loading software from said host computer to said given spoke meter via said hub unit.

38. A method according to claim 36 or 37, further characterised by the step of storing said control software in a CMOS static RAM included in said hub unit.

39. A method according to claim 38, further characterised by the steps of storing system configuration parameters, drivers and time stamped event log data in said CMOS static RAM.

40. A method according to claim 38 or 39, further characterised by the steps of segmenting and allocating said CMOS static RAM to facilitate the storing of data sets therein that are each uniquely associated with one of said spoke meters.

41. A method according to any of claims 38 to 40, further characterised by the step of storing data in an EPROM which facilitates the initialisation of said hub unit and which permits said hub unit to perform self diagnostics and initiate communication with said host computer.

42. A method according to claim 41, further characterised by the step of performing memory mapping of said EPROM and said CMOS static RAM.

43. A method according to any of claims 36 to 42, further characterised by the step of storing critical system parameters in an EEPROM.

44. A method according to any of claims 25 to 43, further characterised by the steps of providing fault tolerant means for operating the system during AC power failures and at low temperatures, and providing means for re-setting the system at user pre-selected intervals and on the occurrence of user specified events.

45. A method according to any of claims 26 to 43, further characterised by the steps of heating hub unit components to permit system operation at remote site temperature levels which would otherwise be below component ratings, and providing back-up battery power for said hub unit in the event of an AC power loss.

TV

CABLE
METER | PM    110

BAR CODES

PURCHASE-
DATA
METER    113

TEST SET
INSTALLATION/
MAINTENANCE/
MONITOR    114

TV

TV
METER | PM    111

NEW-DEVICE
METER    115

VCR

VCR
METER    112

ADD-ON
MEMORY
MODULE    116

Peripherial Communications

IRF Module

Carrier-Current Module    Hard Wire Module

CLOCK

199

HUB

MEMORY

198

Telco / Communications Interface

150    151    101

1200 | 2400

175

PUBLIC (DIAL-UP) SWITCHED
TELEPHONE NETWORK

| TCI-1 | TCI-2 | TCI-3 | TCI (TELCO/COMMUNICA-TIONS INTERFACE) No. 4 | TCI-5 | TCI:.... | TCI n |

HOST COMPUTER SYSTEM

102